# EUROPÄISCHE PATENTANMELDUNG

(11) **EP 1 607 722 A2**
(43) Veröffentlichungstag der Anmeldung: **21.12.2005**
(21) Anmeldenummer: 05008311.2
(22) Anmeldetag: 15.04.2005
(51) Int. Cl.: G01D 5/347

(54) **Optischer Kodierer mit strahlablenkenden Kodierelementen**

(30) Priorität: 03.06.2004 DE 102004027226
(71) Anmelder: Methode Electronics Malta Ltd., Mriehel QRM 09 (MT)
(72) Erfinder: Slanec, Konrad, St. Julians SLM 05 (MT); Zammit, Marvin, Sliema SLM 14 (MT)
(74) Vertreter: Haft, von Puttkamer, Berngruber, Czybulka

(57) **Zusammenfassung**

Ein Träger (2) mit optischen durchleuchtbaren Positionsmarken (3) ist zwischen einer Lichtquelle (5) und einem optischen Detektor (4) positionierbar. Die Positionsmarke (3) ist als strahlablenkendes optisches Element ausgebildet, das im mittleren Abbildungsbereich auf der Detektorebene signifikante Intensitätsabweichungen des Lichts (8) erzeugt.
Dadurch ist es mit geringem Fertigungsaufwand möglich, eine gegen Störeinflüsse robuste Messeinrichtung zu schaffen.

## Beschreibung

Die Erfindung bezieht sich auf einen Träger mit zumindest einer optischen durchleuchtbaren Positionsmarke, die zwischen einer Lichtquelle und einem optischen Detektor positionierbar ist.

Es ist z.B. für die Ermittlung eines Drehwinkels üblich, den als Maske ausgebildeten scheibenförmigen Träger mit periodisch aneinandergereihten durchleuchteten Aussparungen zu versehen, die sich auf dem optischen Detektor in Abhängigkeit von ihrer Relativstellung mit abweichender Intensität abbilden.
Die Auflösung des Encoders wird u.A. durch die Breite dieser Aussparungen bestimmt. Der Kontrast wird durch die Streu- und Beugungseffekte beeinträchtigt, die eine Mindestbreite der Aussparungen bedingen. Da die Encoderscheibe aus Stabilitätsgründen nicht beliebig dünn werden darf, ist es z.B. stanztechnisch schwierig beliebig kleine Schlitze zu erzeugen. Wegen der Streu- und Beugungseffekte ist es außerdem erforderlich, den Abstand zum Detektor möglichst klein zu halten und präzise einzustellen, was eine stabile Konstruktion mit aufwändiger Montage und Justierung erfordert. Um einen guten Kontrast zu erreichen, muss auch der Abstand zwischen den Aussparungen annähernd gleich deren Breite sein, was einen entsprechend großen Teilungsabstand bedingt. Verschmutzungen z.B. in Form von anhaftenden Partikeln beeinträchtigen die Intensitätsverteilung unmittelbar.

Der Erfindung liegt die Aufgabe zugrunde, den Fertigungsaufwand zu verringern und die Funktionssicherheit zu erhöhen.

Diese Aufgabe wird durch die im Kennzeichen des Anspruchs 1 angegebenen Merkmale gelöst. Das z.B. fokussierende optische Element bewirkt, dass sich die Positionsmarke auf einem schmalen Detektorfenster stark verkleinert abbildet, was sich in einer entsprechend erhöhten Lichtintensität im Abbildungszentrum und einer starken Abnahme zu beiden Seiten des Zentrums darstellt. Das bedeutet z.B., dass ein oberer Meßschwellwert einen engen Breitenbereich umfasst, der eine entsprechend enge Positionszuordnung zulässt. Besonders gute Kontraste ergeben sich, wenn die Maske in der Fokusebene liegt. Aber auch bei größeren Abweichungen bildet sich der Intensitätsverlauf in einer flacheren, aber noch immer deutlichen Wellenform ab. Da das optische Element einen größeren Flächenbereich zusammenfasst, wird der Einfluss von Verschmutzung verringert. Durch Kollimieren des Lichtstrahls lässt sich die Abhängigkeit der Intensitätsverteilung vom Detektorabstand erheblich verringern. Wegen der Unempfindlichkeit ist sind die mechanischen und fertigungstechnischen Anforderungen an eine die Positionsmarke aufweisende Messeinrichtung gering.

Vorteilhafte Weiterbildungen der Erfindung ergeben sich aus den in den Ansprüchen 2 bis 8 gekennzeichneten Merkmalen.

Die Positionsmarke nach den Ansprüchen 2 und 3 weist besonders günstige optische Eigenschaften auf und lässt sich in einfacher Weise herstellen.

Beim Träger nach den Ansprüchen 4 und 5 können die Positionsmarken ohne zusätzliche Fertigungsschritte z.B. in einem Spritzgießvorgang erzeugt werden, wobei die Positionsmarke auch als kugelartige Erhebung ausgebildet sein kann.

Durch die Weiterbildung nach Anspruch 6 kann der Teilungsabstand zwischen den Positionsmarken bei hoher Abbildungsschärfe auf ein Minimum reduziert werden.

Die Wellenform nach Anspruch 7 ergibt alternierende Fokussierungen und Streuungen mit besonders starken Kontrastunterschieden.

Die Weiterbildung nach Anspruch 8 stellt eine besonders günstige Anwendung dar, bei der sich die Positionsmarken auf dem kompakten scheibenartigen Träger mit geringem Aufwand ausbilden lassen. Ein derartiger Encoder kann somit leichter in ein miniaturisiertes Drehmodul integriert werden.

Ein Ausführungsbeispiel der Erfindung ist in der Zeichnung dargestellt und wird im folgenden näher erläutert. Es zeigen:
- Figur 1: eine teilweise entlang der Linie I - I in Figur 2 geschnittene Seitenansicht einer erfindungsgemäßen Winkelmesseinrichtung,
- Figur 2: eine Draufsicht auf die Winkelmesseinrichtung nach Figur 1,
- Figur 3: ein Funktionsschema einer Winkelmesseinrichtung nach den Figuren 1 und 2,
- Figur 4: ein Funktionsschema einer anderen Winkelmesseinrichtung nach der Erfindung,
- Figur 5: ein Funktionsschema einer Winkelmesseinrichtung nach dem Stand der Technik.

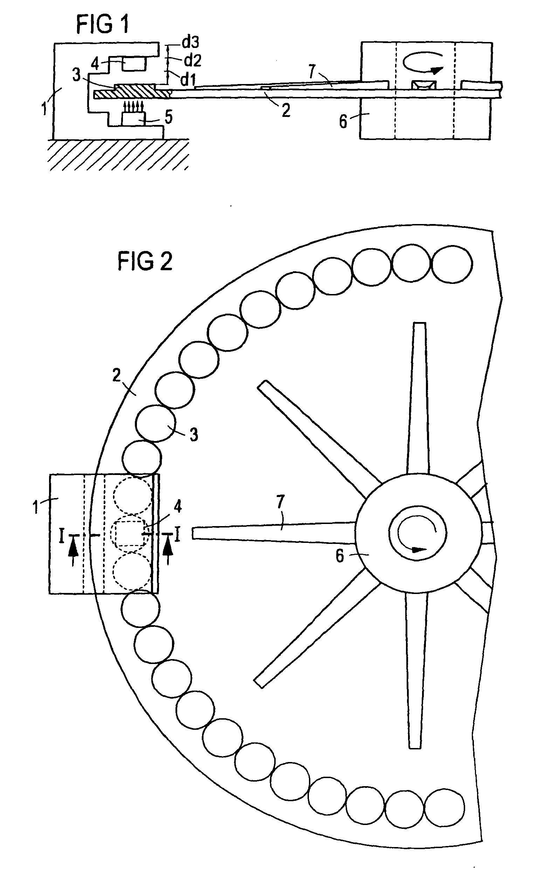

Nach den Figuren 1 und 2 besteht eine Winkelmesseinrichtung aus einem stationären Messkopf 1 und einem um eine Achse scheibenartigen drehbaren Träger 2 mit konzentrisch periodisch verteilten, als Zylinderlinsen ausgebildeten Positionsmarken 3, die eine Winkelmeßskala bilden. Der Messkopf weist auf einer Seite des Trägers 2 im Bereich der Positionsmarken 3 einen optischen Detektor 4 und auf der gegenüberliegenden Seite eine Lichtquelle 5 auf, die in die Richtung des Detektors 4 strahlt. Die eine Zählskala bildenden Positionsmarken 3 sind am transparenten Träger 2 auf der Seite des Detektors 4 einstückig als zylindrische Erhebungen ausgebildet und mit geringem Teilungsabstand unmittelbar angrenzend aneinandergereiht. Mehrere Spuren der Positionsmarken können mit einem entsprechenden Mehrfachdetektor auch eine kodierte Positionsskala bilden.

Der Detektor 4 ist mit einem relativ zur Größe der Positionsmarken 3 schmalen, hier nicht dargestellten Detektorfenster für eine genaue Lagezuordnung versehen und ist in der Lage unterschiedliche Lichtintensitäten genau zu unterscheiden. Zur besseren Lagezuordnung und ist es auch möglich, zumindest zwei der Detektoren zu einem ortauflösenden, sich in der Drehrichtung erstreckenden Liniensensor zusammenzufassen.

Das Detektorfenster ist hier im Abstand d1 von der freien Stirnseite der Zylinderlinse in deren Fokus angeordnet. Der Abstand lässt sich z.B. auf den Wert d2 vergrößern, ohne die Messgenauigkeit erheblich zu beeinträchtigen. Ein weiterer Abstand d3, der ein noch auswertbares Detektorsignal ermöglicht, dient vor allem dazu, nachfolgend den Unterschied zu einer Positionsmarke nach dem Stand der Technik darzustellen.

Der Träger ist in seinem Zentrum mit einer Nabe 6 zur drehfesten Verbindung mit in nicht näher dargestellten Welle versehen, deren Winkelstellung oder Winkeländerung überwacht werden soll. Zwischen der Nabe 6 und den Positioniermarken 3 erstrecken sich radial sternförmig angeordnete Verstärkungsrippen 7.

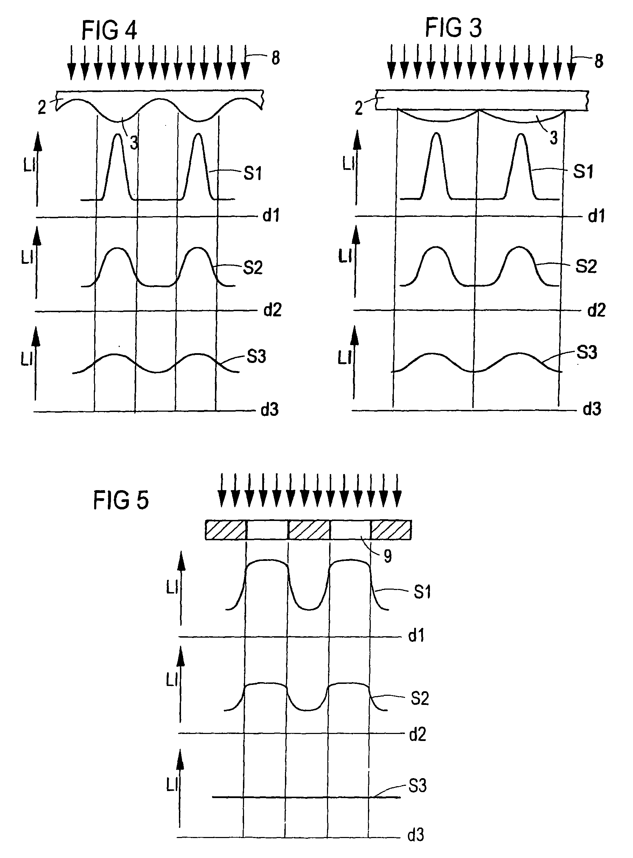

Die Figuren 3 bis 5 zeigen die Verteilung der Lichtintensität LI in der Detektorebene über der Abtaststrecke mit jeweils unterschiedlichen Arten der Positionsmarken bei den Abständen d1, d2 und d3.

Figur 3 zeigt einen Ausschnitt aus dem Träger 2, wobei hier die Positionsmarken 3 zur besseren Erkennbarkeit als erhabene Kugelkalotten dargestellt sind. Im Abstand d1 befindet sich das Empfangsfenster des Detektors im Fokus der als Sammellinse ausgebildeten Positioniermarke 3. Das von der Lichtquelle 5 (Figur 1) gesendete Licht 8 wird durch die Sammellinse so stark gebündelt, das über dem Zentrum der Positioniermarke eine stark erhöhte Lichtintensität LI herrscht, die zu beiden Seiten des Zentrums stark abfällt und bereits innerhalb des Markenbereichs auf den Tiefstwert abfällt. Ein derart deutlich ausgeprägtes Signal S1 ist gegen äußere Störungen besonders robust. Beim Abstand d2 ist das Signal S2 zwar abgeflacht, aber noch immer deutlich und gut erfassbar ausgeprägt. Auch im Abstand d3 ist das die Verteilung der Lichtintensität noch deutlich als wellenförmiges Signal S3 erkennbar.

Nach Figur 4 ist die Positioniermarke im Träger 3 auf der dem Detektor zugewandten Seite des Trägers als Welle ausgeformt. Eine Vielzahl der Wellen ist derart aneinander gereiht, dass sich im Querschnitt ein stetige Wellenlinie ergibt in der sich fokussierende konkave und streuende konvexe Teile einander abwechseln. Es ergibt sich dabei eine ähnlich deutliche Intensitätsverteilung wie bei der Positioniermarke nach Figur 3.

Figur 5 zeigt die bekannten Positioniermarken in Form einfacher schlitzsartiger Durchbrüche 9 in einem intransparenten Träger. Im engen Abstand d1 ist der Unterschied der Lichtintensität LI noch deutlich als Signal S1 ausgeprägt, jedoch nicht so scharf fokussiert wie nach den Figuren 3 und 4. Um einen ähnlich großen Pegelunterschied zu erreichen ist eine starke Lichtquelle erforderlich. Das Maximum des Signals S1' kann weniger genau der Markenposition zugeordnet werden. Im Abstand d2 ist der Intensitätsunterschied zwischen dem Maximum und dem Minimum in der Form des Signals S2' durch Streu- und Beugungseffekte bereits erheblich eingeebnet und im Abstand d3 bereits nicht mehr vorhanden. Der Verlauf des entsprechenden nicht mehr auswertbaren Signals S3'ist somit geradlinig waagerecht.

### Bezugszeichen

- 1: Messkopf
- 2: Träger
- 3: Positionsmarke
- 4: Detektor
- 5: Lichtquelle
- 6: Nabe
- 7: Verstärkungsrippe
- 8: Licht
- 9: Durchbruch

## Patentansprüche

1. Träger mit zumindest einer optischen durchleuchtbaren Positionsmarke (3), die zwischen eine Lichtquelle (5) und einen optischen Detektor (4) positionierbar ist,
**dadurch gekennzeichnet, dass** die Positionsmarke (3) als strahlablenkendes optisches Element ausgebildet ist, das im mittleren Abbildungsbereich auf der Detektorebene signifikante Intensitätsabweichungen des Lichts (8) erzeugt.

2. Träger nach Anspruch 1,
**dadurch gekennzeichnet, dass** die Positionsmarke (3) als Sammellinse ausgebildet ist.

3. Träger nach Anspruch 2,
**dadurch gekennzeichnet, dass** die Positionsmarke (3) als Zylinderlinse ausgebildet ist.

4. Träger nach Anspruch 1, 2 oder 3,
**dadurch gekennzeichnet, dass** die Positionsmarke (3) am transparenten Träger (2) einstückig ausgeformt ist.

5. Träger nach einem der vorhergehenden Ansprüche,
**dadurch gekennzeichnet, dass** der als Encoder dienende Träger (2) eine Vielzahl der eine Meßskala bildenden aneinandergereihten Positionsmarken (3) aufweist.

6. Träger nach Anspruch 5,
**dadurch gekennzeichnet, dass** die Positionsmarken (3) am transparenten Träger (2) annähernd abstandslos aneinander gereiht sind.

7. Träger nach Anspruch 6,
**dadurch gekennzeichnet, dass** die Positionsmarken (3) wellenförmig ausgebildet sind und in der Art einer Wellenbahn am Träger (2) fortlaufend aneinander gereiht sind.

8. Träger nach Anspruch 5, 6 oder 7,
**dadurch gekennzeichnet, dass** der Träger (2) als Spritzgießteil ausgebildet ist und dass die konzentrisch um eine Achse angeordneten Positionsmarken (3) eine Winkelmeßskala bilden.
